# EUROPÄISCHE PATENTSCHRIFT

(11) **EP 1 213 490 B1**
(45) Veröffentlichungstag und Bekanntmachung des Hinweises auf die Patenterteilung: **10.10.2007**
(21) Anmeldenummer: 01128607.7
(22) Anmeldetag: 30.11.2001
(51) Int. Cl.: F16B 7/04, E04B 2/76

(54) **Verbindungsmittel für Profilstäbe**
Connection mean for profiled rods
Moyen de connection pour barres profilées

(30) Priorität: 05.12.2000 DE 10060597
(43) Veröffentlichungstag der Anmeldung: 12.06.2002
(73) Patentinhaber: GROHEDAL Sanitärsysteme GmbH & Co.KG, D-32457 Porta Westfalica (DE)
(72) Erfinder: Jecke, Michael, 32423 Minden (DE)
(74) Vertreter: Ziegler, Thomas

(56) Entgegenhaltungen:
- FR-A- 2 653 798
- GB-A- 2 029 490
- US-A- 3 604 168

## Beschreibung

Die Erfindung betrifft eine Vorrichtung zum Verbinden von Profilstäben, wobei zwei Platten vorgesehen sind, die mit wenigstens einer Schraube lösbar an wenigstens einem Profilstab befestigbar sind und dabei jeweils mit geneigten Spannflächen in Nuten von einem oder mehreren Profilstäben einfassen.

Ein derartiges Verbindungsmittel ist aus dem französischen Gebrauchsmuster Veröffentlichungsnummer FR 2653798 bekannt geworden. Hierbei sind zwei parallel angeordnete Platten vorgesehen, mit denen zwei Profilstäbe in einem 90 Grad Winkel oder einem 45 Grad Winkel miteinander verbunden werden können. Die rohrförmigen Profilstäbe haben dabei vier in Längsrichtung verlaufende Nuten, wobei jeweils in eine Nut eine Platte mit einer geneigt zur Plattenebene angeordneten Spannfläche einfasst. Zur festen Verbindung sind in den beiden Platten zwei Schraubbolzen mit Muttern angeordnet, von denen die Platten gegen jeweils eine entsprechend geneigt angeordnete Seitenwand in den Nuten der Profilstäbe verspannbar sind. Das Zusammenfügen der Profilstäbe mit den Verbindungsmitteln ist hierbei jedoch relativ aufwendig.

Der Erfindung liegt die Aufgabe zugrunde, ein Verbindungsmittel zu schaffen, das einfach an den Profilstäben anbringbar ist. Hierbei gehört es mit zur Aufgabe, das Verbindungsmittel so auszubilden, dass es vielseitig einsetzbar ist und kostengünstig herstellbar ist.

Diese Aufgabe wird erfindungsgemäß mit dadurch gelöst, dass die beiden Platten von einer Feder auf einem bestimmten Abstand zueinander gehalten sind, so dass die Platten der Vorrichtung elastisch federnd in den Nuten der Profilstäbe einschnappbar sind.

Weitere Ausgestaltungen der Erfindung sind in den Ansprüchen 2-15 angegeben.

Die mit der Erfindung erzielbaren Vorteile bestehen insbesondere darin, dass das Verbindungsmittel mit der integrierten Feder eine Klammerfunktion bietet, wodurch es klemmend am Profilstab vorpositioniert werden kann und dabei trotzdem für das Erreichen seiner Endlage verschiebbar bleibt.

In weiterer Ausgestaltung der Erfindung kann die Feder zweckmäßig als gummielastisches Element, vorzugsweise aus Moosgummi, ausgebildet werden und fest mit den beiden Platten durch Klebung, Anspritzen oder Anvulkanisieren verbunden sein.
Um einen vielseitigen Einsatz zu ermöglichen weisen die Platten vorteilhaft in der Draufsicht die Form eines gleichschenkligen Trapezes auf, wobei die beiden Schenkel in einem Winkel von 90° zueinander angeordnet sind. Hierbei weist die kurze parallele Seite des Trapezes zweckmäßig etwa eine Länge auf, die etwa der Länge des Schenkels entspricht, so das Profilstabverbindungen in einem Winkel von 90° und 45° sowie Parallelverbindungen und Koaxialverbindungen ermöglicht werden.
Um die Vorpositioniermöglichkeit des Verbindungsmittels auf einem Profilstab weiter zu verbessern, kann zweckmäßig das gummielastische Element so ausgebildet sein, dass in der Stecklage eine Stirnseite des Elements gegen eine Außenseite des Profilstabs gedrückt wird, so das durch die Reibung einerseits ein selbsttätiges Verschieben verhindert wird, andererseits ein Verschieben von Hand aber noch ermöglicht ist.
Zur Erleichterung des Aufschnappvorgangs auf dem Profilstab werden zweckmäßig die Platten an den Stirnseiten parallel zu den Spannflächen mit Schrägflächen versehen.
Neben einer Spannschraube im Zentrum der Platten mit der die beiden Platten dauerhaft an einem oder mehreren Profilstäben verspannt werden, können zweckmäßig zu beiden Seiten Öffnungen oder Durchgangsbohrungen vorgesehen werden, die wahlweise die Aufnahme von Schraubbolzen mit Haltewinkeln zur Befestigung z. B. eines kompletten Profilstabrahmens an einem Gebäude, wie es beispielsweise für Vorwandinstallationen von Sanitärgegenständen und -armaturen verwendet wird.

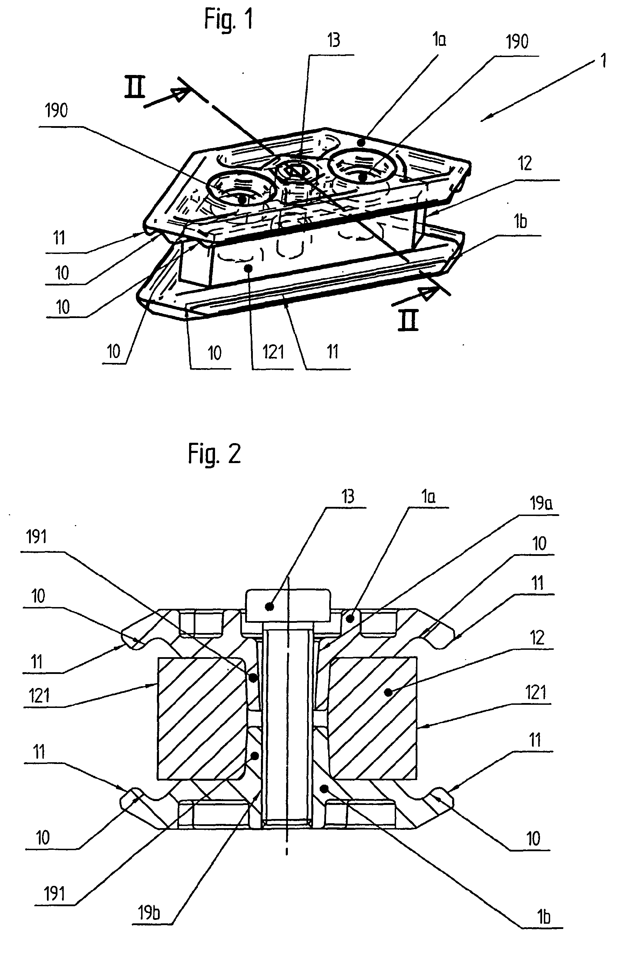

Ein Ausführungsbeispiel der Erfindung ist in der Zeichnung dargestellt und wird im Folgenden näher beschrieben. Es zeigt
- Fig. 1: eine Verbindungsvorrichtung in Perspektivansicht;
- Fig. 2: die in Figur 1 gezeigte Verbindungsvorrichtung in der Schnittebene II;
- Fig. 3A: die in Figur 2 gezeigte Verbindungsvorrichtung in verkleinerter Darstellung mit einem rohrförmigen Profilstab vor dem Aufschnappen auf dem Profilstab;
- Fig. 3B: die in Figur 3A gezeigte Verbindungsvorrichtung mit zwei parallel aufgeschnappten Profilstäben;
- Fig. 3C: die in Figur 3B gezeigte Anordnung in Seitenansicht;
- Fig. 4: die in Figur 1 gezeigte Verbindungsvorrichtung mit zwei im 90 Grad Winkel angeordneten Profilstäben in Perspektivdarstellung;
- Fig. 5: die in Figur 1 gezeigte Verbindungsvorrichtung mit zwei im Winkel von 45° angeordneten Profilstäben in Perspektivansicht;
- Fig. 6: die in Figur 1 gezeigte Verbindungsvorrichtung mit zwei koaxial angeordneten Verbindungsstäben in Perspektivansicht;
- Fig. 7: eine in Figur 1 gezeigte Platte mit einer Spannschraubenaufnahme in Draufsicht;
- Fig. 8: die in Figur 7 gezeigte Platte um 90° gedreht;
- Fig. 9: die in Figur 7 gezeigte Platte um 180° gedreht;
- Fig. 10: die in Figur 9 gezeigte Platte um 90° gedreht;
- Fig. 11: die in Figur 8 gezeigte Platte um 180° gedreht;
- Fig. 12: die in Figur 1 gezeigte Platte mit Gewinde für eine Spannschraube in Draufsicht;
- Fig. 13: die in Figur 12 gezeigte Platte um 180° gedreht;
- Fig. 14: die in Figur 13 gezeigte Platte in der Schnittebene XIV;
- Fig. 15: das in Figur 1 gezeigte gummielastische Element in Draufsicht;
- Fig. 16: das in Figur 15 gezeigte gummielastische Element um 90° gedreht.

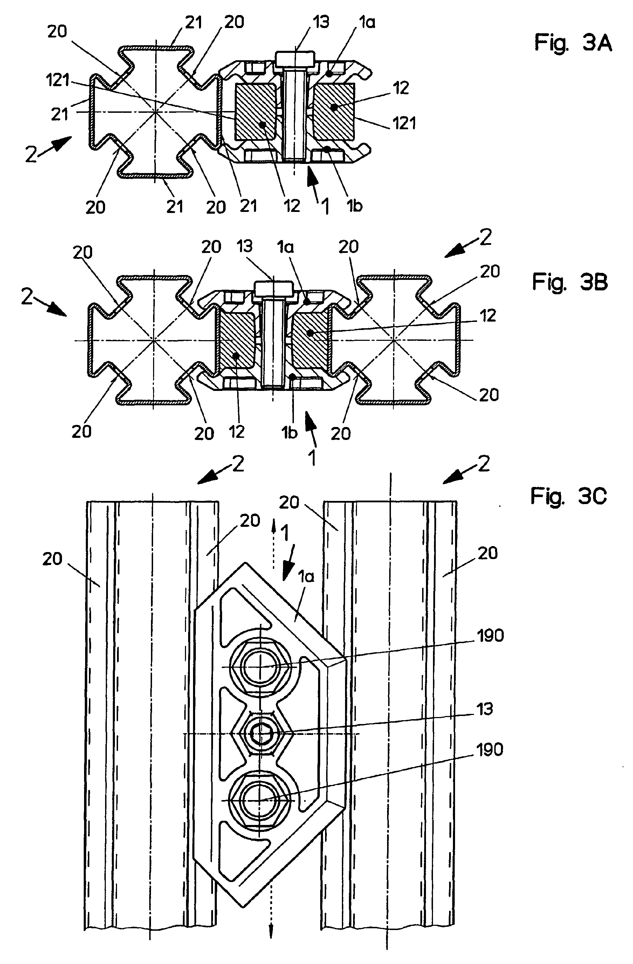

Die in der Zeichnung dargestellte Vorrichtung 1 besteht aus einer ersten Platte 1a und einer zweiten Platte 1b, einem gummielastischen Element 12 sowie einer Spannschraube 13. Die Vorrichtung 1 ist zum Verbinden von Profilstäben 2 vorgesehen, wie sie in der Zeichnung in Figur 3A bis Figur 6 gezeigt sind.

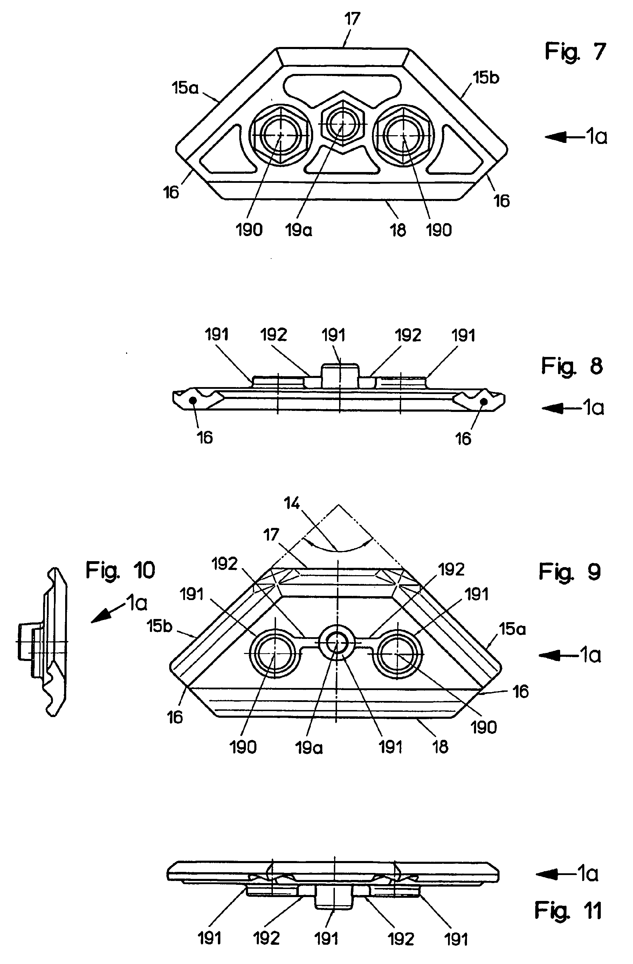

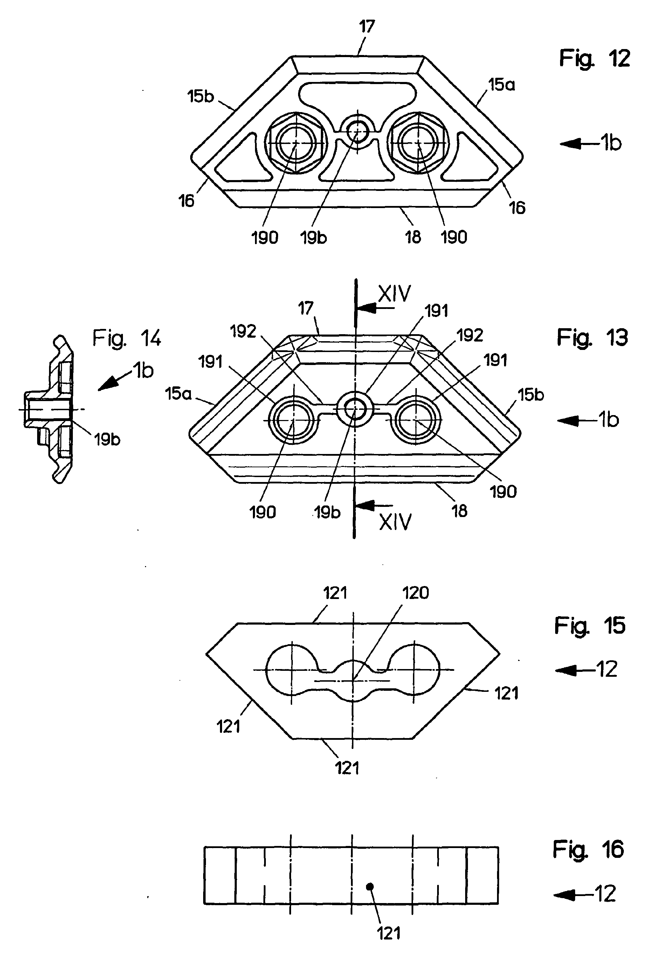

Die mit Abstand zueinander gehaltenen beiden Platten 1a und 1b unterscheiden sich voneinander lediglich dadurch, dass die Platte 1a eine Durchgangsbohrung 19 a für die Spannschraube 13 aufweist, während die Platte 1b eine Gewindebohrung 19 b aufweist. Im Übrigen sind die beiden Platten identisch ausgebildet.
Alternativ können die beiden Platten auch identisch gleich ausgebildet sein, so dass dann nur ein Herstellungsmittel für die beiden Platten benötigt wird, wobei dann anstatt einer Spannschraube ein Schraubbolzen mit einer Mutter in den Durchgangsbohrungen einzusetzen ist.
Die beiden Platten 1a, 1b sind aus einer Zinklegierung im Druckgussverfahren hergestellt. Sie weisen die Grundform eines gleichschenkligen Trapezes auf, wobei die Schenkel 15a und 15b einen Winkel 14 von 90° zueinander bilden. Die Länge der Schenkel 15a, 15b entspricht etwa der Länge einer kurzen parallelen Seite 17 des Trapezes. Der Übergang von den Schenkeln 15a und 15b zu der langen parallelen Seite 18 ist jeweils durch einen senkrecht zur Kante der Schenkel verlaufenden Abschnitt 16 hergestellt. An den Seiten 17, 18 und den Schenkeln 15a, 15b ist jeweils eine gewölbte Spannfläche 10 und eine Schrägfläche 11 ausgebildet. Im Zentrum der Platten 1a, 1b ist eine kegelförmige Durchgangsbohrung 19a bzw. eine Gewindebohrung 19b ausgebildet. Parallel neben der Durchgangsbohrung 19a bzw. Gewindebohrung 19b sind zu beiden Seiten Öffnungen 190 ausgebildet, die zur Befestigung von in der Zeichnung nicht dargestellten Halterungen etc. dienen können.
Die beiden Platten 1a, 1b sind jeweils an der Innenseite bzw. an der Seite an der die Spannflächen 10 ausgebildet sind mit dem gummielastischen Element 12 verklebt. Hierbei weisen die Platten an der Innenseite konzentrisch zu der Durchgangsbohrung 19a, der Gewindebohrung 19b und den Öffnungen 190 jeweils Vorsprünge 191 auf, wobei die Vorsprünge 191 mit Rippen 192 verbunden sind, wie es insbesondere aus Figur 8,9,11 und 13 der Zeichnung ersichtlich ist. Das gummielastische Element 12 hat dabei eine entsprechende Ausnehmung 120, wie es aus Figur 15 der Zeichnung zu entnehmen ist, wodurch es gewährleistet ist, dass beim Klebevorgang das gummielastische Element 12 die exakte Position zu den beiden Platten 1a, 1b einnimmt. Das gummielastische Element 12 ist dabei mit Stirnflächen 121 versehen, die so angeordnet sind, dass sie in der Schnappposition der Vorrichtung 1 reibend an der Oberfläche eines Profilstabs 2 oder zwei Profilstäben 2 anliegen.

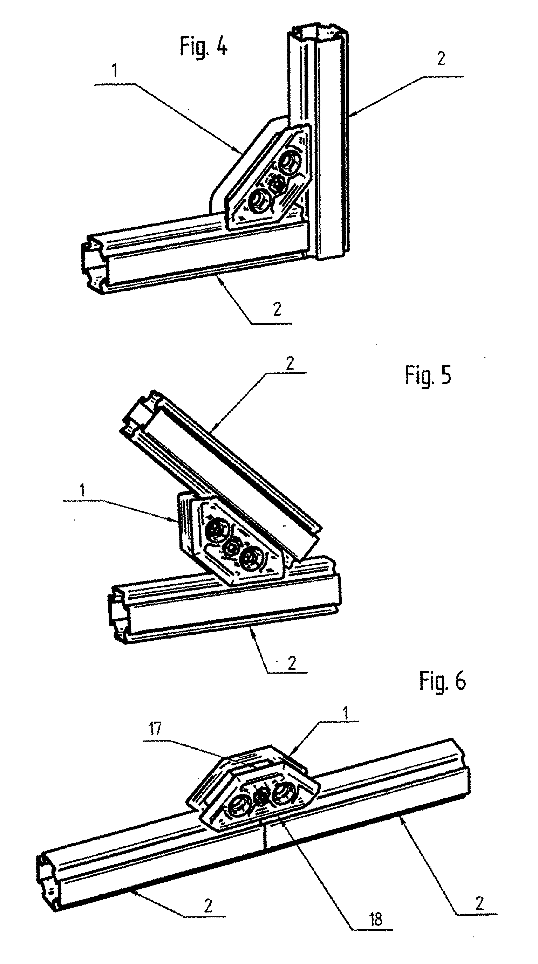

Die Herstellung einer Verbindung zwischen der Vorrichtung 1 und einem oder mehreren Profilstäben 2 kann in folgender Weise erfolgen:
Die Vorrichtung 1 wird seitlich an einen Profilstab 2 herangebracht. Der Profilstab 2 ist rohrförmig mit einem quadratischen Querschnitt ausgebildet, wobei an den Ecken diagonal gegenüberliegende Nuten 20 eingeformt sind, so dass etwa schwalbenschwanzförmige Stege 21 gebildet werden, wie es insbesondere aus Figur 3A ersichtlich ist. Die Vorrichtung 1 wird hierbei mit den Schrägflächen 11 gegen die Endbereiche der Stege 21 gedrückt, wodurch unter einer federelastischen Streckung der Abstand zwischen den beiden Platten 1a, 1b im Bereich der Spannfläche 10 vergrößert wird, so das der jeweilige vordere Teil mit der Schrägfläche 11 der Platten 1a, 1b in die jeweilige Nute 20 des Profilstabs 2 einschnappen kann, wie es in Figur 3B und 3C dargestellt ist. Die beiden parallel angeordneten Profilstäbe werden hierbei einerseits durch die federelastische Spannung des Elements 12 mit den Spannflächen 10 in der Vorrichtung 1 gehalten. Darüber hinaus drücken zusätzlich noch die Stirnseiten 121 des Elements 12 gegen die Oberfläche der beiden Profilstäbe 2, so das die Vorrichtung 1 in der in Figur 3C gezeigten Stecklage eine erste Fixierung aufweist, hierbei kann jedoch die Vorrichtung 1 von Hand noch relativ zu einem oder zu beiden Profilstäben 2 verschoben werden. Erst wenn die beiden Profilstäbe 2 und die Vorrichtung 1 die gewünschte Position einnehmen, kann durch das Festdrehen der Spannschraube 13 die endgültige Verbindung hergestellt werden. Dabei wird die der Kontur des Profilstabes 2 angepasste Spannfläche 10 fest an dem Profilstab 2 verpresst.
Neben der in Figur 3A bis 3C gezeigten parallelen Anordnung von Profilstäben 2 ermöglicht die Vorrichtung 1 auch die Verbindung von zwei in einem 90 Grad Winkel zueinander stehenden Profilstäben, wie es aus Figur 4 der Zeichnung zu entnehmen ist. Auch können die Profilstäbe 2 in einem Winkel von 45° zueinender verbunden werden (Figur 5) und schließlich ist es auch möglich, zwei koaxial angeordnete Profilstäbe 2 mit der Vorrichtung 1 zu verbinden, wie es aus Figur 6 zu entnehmen ist. Hierbei kann an der kurzen parallelen Seite 17 ein Distanzstück - in der Zeichnung nicht dargestellt - eingefügt werden.
Mit mehreren Profilstäben 2 und Vorrichtungen 1 kann somit in einfacher Weise beispielsweise ein Tragrahmen für Sanitärinstallationsgegenstände oder eine Leichtbauwand hergestellt werden.
Der Tragrahmen kann, wenn er für eine sogenannte Vorwandinstallation verwendet werden soll, mit bekannten Abstandshaltern, die wahlweise in Öffnungen 190 der Vorrichtung 1 fixierbar sind, vor der Gebäudewand befestigt werden.

## Patentansprüche

1. Vorrichtung zum Verbinden von Profilstäben, wobei zwei Platten (1a,1b) vorgesehen sind, die mit wenigstens einer Schraube (13) lösbar an wenigstens einem Profilstab (2) befestigbar sind und dabei jeweils mit geneigten Spannflächen (10) in Nuten (20) von einem oder mehreren Profilstäben (2) einfassen, **dadurch gekennzeichnet, dass** die beiden Platten (1a, 1b) von einer Feder (12) auf einen bestimmten Abstand zueinander gehalten sind, so dass die Platten (1a, 1b) der Vorrichtung (1) elastisch federnd in die Nuten (20) der Profilstäbe (2) einschnappbar sind.

2. Vorrichtung nach Anspruch 1 **dadurch gekennzeichnet, dass** als Feder (12) ein gummielastisches Element zwischen den beiden Platten angeordnet ist.

3. Vorrichtung nach Anspruch 2 **dadurch gekennzeichnet dass** das Element (12) aus Moosgummi hergestellt ist.

4. Vorrichtung nach Anspruch 2 oder 3, **dadurch gekennzeichnet, dass** das gummielastische Element (12) an den beiden Platten (1a, 1b) angeklebt, angespritzt oder anvulkanisiert ist.

5. Vorrichtung nach wenigstens einem der vorhergehenden Ansprüche, **dadurch gekennzeichnet, dass** die beiden Platten identisch ausgebildet sind, wobei sie von einem Bolzen mit einer Mutter verspannbar sind.

6. Vorrichtung nach wenigstens einem der Ansprüche 1 bis 5, **dadurch gekennzeichnet, dass** die Platte (1a, 1b) jeweils die Form eines gleichschenkligen Trapezes aufweist, und die Schenkel (15a, 15b) mit einem Winkel (14) von 90° zueinander angeordnet sind und jede Seite eine Spannfläche (10) hat.

7. Vorrichtung nach Anspruch 6, **dadurch gekennzeichnet, dass** die beiden Schenkel (15a, 15b) von jeweils einem senkrecht zu den Schenkeln (15a, 15b) verlaufenden Abschnitt (16) in der Länge so verkürzt sind, dass sie jeweils etwa der Länge der kurzen parallelen Seite 17 des Trapezes entspricht.

8. Vorrichtung nach Anspruch 6 oder 7, **dadurch gekennzeichnet, dass** im Zentrum der einen Platte (1a) eine Durchgangsbohrung (19a) und in der anderen Platte (1b) eine Gewindebohrung (19b) für eine Spannschraube (13) vorgesehen ist.

9. Vorrichtung nach wenigstens einem der vorhergehenden Ansprüche, **dadurch gekennzeichnet, dass** parallel zu den Seiten des Trapezes und symmetrisch zu beiden Seiten des Zentrums je eine weitere Öffnung (190) für die Befestigung von Abstandshaltern und / oder Haltemitteln ausgebildet ist.

10. Vorrichtung nach Anspruch 9 **dadurch gekennzeichnet, dass** an der Innenseite der Platte (1a, 1b) im Bereich der Öffnungen (190) Vorsprünge (191) ausgebildet sind, die mit Rippen (192) miteinander verbunden sind, wobei das gummielastische Element (12) eine entsprechende Ausnehmung (120) aufweist, so das in einfacher Weise ein passgenaues Zusammenfügen der Platten (1a, 1b) und des Elements (12) ermöglicht wird.

11. Vorrichtung nach wenigstens einem der vorhergegangenen Ansprüche, **dadurch gekennzeichnet, dass** das Element (12) mit parallel zu den Spannflächen (10) verlaufenden Stirnflächen (121) versehen ist, derart, dass nach dem Einschnappen eines Profilstabs (2) in die Vorrichtung (1) die Stirnfläche (121) federelastisch gegen die Oberfläche des Profilstabes (2) drückt, wodurch einerseits ein selbsttätiges axiales Verschieben verhindert wird, andererseits ein axiales Verschieben von Hand aber ermöglicht ist.

12. Vorrichtung nach wenigstens einem der vorhergehenden Ansprüche, **dadurch gekennzeichnet, dass** die Durchgangsbohrung (19a) nach außen kegelförmig erweitert ist, so das ein Verkippen der beiden Platten (1a, 1b) beim Einschnappen des Profilstabes (2) ermöglicht ist.

13. Vorrichtung nach wenigstens einem der vorhergehenden Ansprüche, **dadurch gekennzeichnet, dass** die Platten (1a, 1b) im Metallgießverfahren hergestellt sind.

14. Vorrichtung nach wenigstens einem der vorhergehenden Ansprüche, **dadurch gekennzeichnet, dass** die Platten (1a, 1b) aus einer Zinklegierung hergestellt sind.

15. Vorrichtung nach wenigstens einem der vorhergehenden Ansprüche, **dadurch gekennzeichnet, dass** parallel zu den Spannflächen (10) an den Stirnseiten der Platten (1a, 1b) Schrägflächen (11) ausgebildet sind, die den Aufschnappvorgang auf den Profilstab (2) erleichtern.

## Claims

1. Device for connecting profile bars, wherein two plates (1a, 1b) are provided which are arranged to be fastened releasably to at least one profile bar (2) by means of at least one screw (13) in the course of which they each engage, with inclined clamping faces (10), in grooves (20) in one or more profile bars (2), **characterised in that** the two plates (1a, 1b) are maintained at a certain spacing from one another by a spring (12), so that the plates (1a, 1b) of the device (1) are arranged to snap with spring resilience into the grooves (20) in the profile bars (2).

2. Device according to claim 1, **characterised in that** there is arranged as the spring (12) between the two plates an element of rubber-like resilience.

3. Device according to claim 2, **characterised in that** the element (12) is produced from sponge rubber.

4. Device according to claim 2 or 3, **characterised in that** the element (12) of rubber-like resilience is bonded to, injection moulded onto or vulcanised onto the two plates (1a, 1b).

5. Device according to at least one of the preceding claims, **characterised in that** the two plates are identically formed and are arranged to be tensioned by a bolt with a nut.

6. Device according to at least one of claims 1 to 5, **characterised in that** each plate (1a, 1b) is in the form of an equilateral trapezium, and the limbs (15a, 15b) are arranged at an angle (14) of 90° to one another and each side has a clamping face (10).

7. Device according to claim 6, **characterised in that** the two limbs (15a, 15b) are so truncated in length, in each case by a portion (16) that extends perpendicularly to the limbs (15a, 15b), that they each correspond approximately to the length of the short parallel side 17 of the trapezium.

8. Device according to claim 6 or 7, **characterised in that** a through-bore (19a) is provided in the centre of one plate (1a) and a threaded bore (19b) in the other plate (1b) for a clamping screw (13).

9. Device according to at least one of the preceding claims, **characterised in that** parallel to the sides of the trapezium and symmetrically on both sides of the centre, a respective further aperture (190) is provided for attaching spacers and/or holding means.

10. Device according to claim 9, **characterised in that** there are formed on the inside of the plate (1a, 1b) in the region of the apertures (190) projections (191), which are connected to one another by ribs (192), wherein the element (12) of rubber-like resilience has a matching recess (120) so that it is possible in a simple way for the plates (1a, 1b) and the element (12) to be fitted together exactly.

11. Device according to at least one of the preceding claims, **characterised in that** the element (12) is provided with front faces (121) that extend parallel to the clamping faces (10) in such a manner that, once a profile rod (2) has been snapped into the device (1), the front face (121) presses spring-resiliently against the surface of the profile bar (2), as a result of which self caused axial displacement, on the one hand, is prevented, but manual axial displacement, on the other hand, is rendered possible.

12. Device according to at least one of the preceding claims, **characterised in that** the through-bore (19a) is widened outwards in the shape of a cone, so that it is possible for the two plates (1a, 1b) to be canted when the profile bar (2) is being snapped in.

13. Device according to at least one of the preceding claims, **characterised in that** the plates (1a, 1b) are produced in a metal casting process.

14. Device according to at least one of the preceding claims, **characterised in that** the plates (1a, 1b) are produced from a zinc alloy.

15. Device according to at least one of the preceding claims, **characterised in that** there are formed parallel to the clamping faces (10), at the front sides of the plates (1a, 1b), inclined faces (11) which facilitate the snapping-on procedure onto the profile bar (2).

## Revendications

1. Dispositif d'assemblage de profilés comportant deux plaques (1a, 1b) fixées de manière amovible par au moins une vis (13) à au moins un profilé (2) et venant prendre par des surfaces de serrage (10) inclinées, respectives, dans des rainures (20) de l'un ou de plusieurs profilés (2),
**caractérisé en ce que**
les deux plaques (1a, 1b) sont maintenues écartées à une certaine distance, par un ressort (12) de façon qu'elles viennent s'engager élastiquement dans les rainures (20) des profilés (2).

2. Dispositif selon la revendication 1,
**caractérisé en ce que**
le ressort (12) est un élément élastique comme du caoutchouc, installé entre les deux plaques.

3. Dispositif selon la revendication 2,
**caractérisé en ce que**
l'élément (12) est en caoutchouc mousse.

4. Dispositif selon la revendication 2 ou 3,
**caractérisé en ce que**
l'élément élastique comme du caoutchouc (12) est collé, surmoulé ou vulcanisé sur les deux plaques (1a, 1b).

5. Dispositif selon au moins l'une des revendications précédentes,
**caractérisé en ce que**
les deux plaques sont identiques et elles sont serrées l'une contre l'autre par une vis avec un écrou.

6. Dispositif selon au moins l'une des revendications 1 à 5,
**caractérisé en ce que**
les plaques (1a, 1b) ont chacune la forme d'un trapèze isocèle et les branches (15a, 15b) font entre elles un angle (14) de 90° et chaque côté a une surface de serrage (10).

7. Dispositif selon la revendication 6,
**caractérisé en ce que**
les deux branches (15a, 15b) sont raccourcies chacune par un segment (16) perpendiculaire à la branche respective (15a, 15b) de façon à ce que leur longueur corresponde sensiblement au petit côté (17) du trapèze.

8. Dispositif selon les revendications 6 ou 7,
**caractérisé par**
un perçage traversant (19a) au centre de l'une des plaques (1a) et un taraudage (19b) dans l'autre plaque (1b) pour une vis de serrage (13).

9. Dispositif selon l'une des revendications précédentes,
**caractérisé en ce que**
parallèlement aux côtés du trapèze et symétriquement par rapport aux deux côtés par rapport au centre, il est prévu chaque fois une ouverture (190) pour fixer des organes d'écartement et/ ou des moyens de fixation.

10. Dispositif selon la revendications 9,
**caractérisé en ce que**
la face intérieure de la plage intérieure (1a, 1b) comporte des parties en saillie (191) au niveau des orifices (190), ces parties en saillie étant reliées par des nervures (192),
l'élément élastique (12) élastique comme du caoutchouc ayant une cavité (120) correspondante de façon à permettre de manière simple un assemblage ajusté des plaques (1a, 1b) et de l'élément (12).

11. Dispositif selon au moins l'une des revendications précédentes,
**caractérisé en ce que**
l'élément (12) a des faces frontales (121) parallèles aux surfaces de serrage (10) de façon qu'après enclipsage d'un profilé (2) dans le dispositif (1), la surface frontale (21) pousse élastiquement comme un ressort contre la surface supérieure du profilé (2), évitant d'une part un glissement axial automatique et permettant d'autre part un coulissement axial à la main.

12. Dispositif selon au moins l'une des revendications précédentes,
**caractérisé en ce que**
le perçage traversant (19a) s'élargit vers l'extérieur en forme de cône pour permettre le basculement des deux plaques (1a, 1b) lors de l'enclipsage du profilé (2).

13. Dispositif selon au moins l'une des revendications précédentes,
**caractérisé en ce que**
les plaques (1a, 1b) sont fabriquées en métal coulé.

14. Dispositif selon au moins l'une des revendications précédentes,
**caractérisé en ce que**
les plaques (1a, 1b) sont fabriquées en un alliage de zinc.

15. Dispositif selon au moins l'une des revendications précédentes,
**caractérisé en ce qu'**
en parallèle aux surfaces de serrage (10), les faces frontales des plaques (1a, 1b) ont des surfaces inclinées (11) qui facilitent l'enclipsage du profilé (2).
